# EUROPEAN PATENT APPLICATION

(11) **EP 1 077 575 A1**
(43) Date of publication of application: **21.02.2001**
(21) Application number: 99830527.0
(22) Date of filing: 19.08.1999
(51) Int. Cl.: H04Q 7/20

(54) **Routing redundancy method in a point to multipoint radio system for an access terminal**

(71) Applicant: TELEFONAKTIEBOLAGET LM ERICSSON, 126 25 Stockholm (SE)
(72) Inventor: Nascimbene, Andrea, 27020 Torre d'Isola - Pavia (IT)
(74) Representative: Faggioni, Carlo Maria, Dr. Ing.

(57) **Abstract**

Access terminal re-routing redundancy capability in point-multipoint radio communication systems, consisting of giving a subscriber access terminal the feature to automatically and autonomously switch from a radio node, to which it is normally connected, to an alternative radio node, usually not dedicated to the redundancy functionality. To this purpose, a redundancy switching logic is provided in said access terminal apt to automatically switch to the alternative radio node (host radio node) upon failure in the connection, which normally operates between the terminal itself and the home radio node.

## Description

### FIELD OF THE INVENTION

This invention relates to an access terminal re-routing redundancy capability for point-multipoint systems.

### BACKGROUND OF THE INVENTION

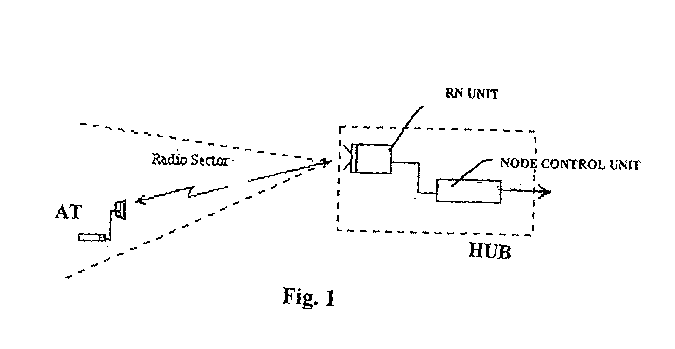

It is well known that subscribers and/or operators in a radio communication system (typically in a radio communication system of the type shown in Fig. 1 of the annexed drawings) may wish an optional superior reliability, able to avoid any system outage. Such superior reliability is of interest also for operators, not only in order to guarantee the service quality, but also to prevent any loss of revenue during possible black outs.

The number of radio nodes (RNs) needed to a Hub site to cover many sectors depends on many factors, and is directly related to the number of the subscriber terminals in the covered area and on the traffic generated by the same terminals.

### SUMMARY OF THE INVENTION

The invention faces the problem with a totally different, new and original approach, by proposing a high redundancy configuration, which is based just on the capacity of an access terminal (AT) of a subscriber to be switched from the home radio node (home RN) - when it is inserted in the normal traffic condition - to a host radio node (host RN) - which is in this way allocated, upon failures, to other access terminals (AT) which are in the same sector and having the possibility of bearing an additional traffic.

More precisely, the invention relates to access terminal re-routing redundancy capability in point-multipoint radio communication systems, consisting of giving an access terminal the feature to automatically and autonomously switch from a radio node, to which it is normally connected, to an alternative radio node, usually not dedicated to the redundancy functionality and independently located in the same or in other hubs.

In this system, a logic of switch and redundancy is provided in the access terminal, which is apt to automatically switch to the alternative radio node (host) upon failure in the connection which normally operates between the terminal itself and the home radio node, while the alternative (host) radio node has the capability to be allocated to other access terminals, which are located in the same sector and has the possibility to bear an additional traffic.

Furthermore, when the alternative radio node is located in a radio node different from the one where is the radio node with respect to which it has been switched from the access terminal, the latter is provided with two antennas, which are directed towards said two different hubs, and with a two-ways radio frequency switch or with a single antenna with electronically routed beams.

### BRIEF DESCRIPTION OF THE DRAWINGS

The invention is now described more in depth below, with reference to the annexed drawings, wherein:
Fig. 1 shows, as above mentioned, the scheme of a typical radio communication system to which the present invention applies;
Fig. 2 is a scheme showing a first way to carry out the invention; and
Fig. 3 is a scheme showing a second way to carry out the invention.

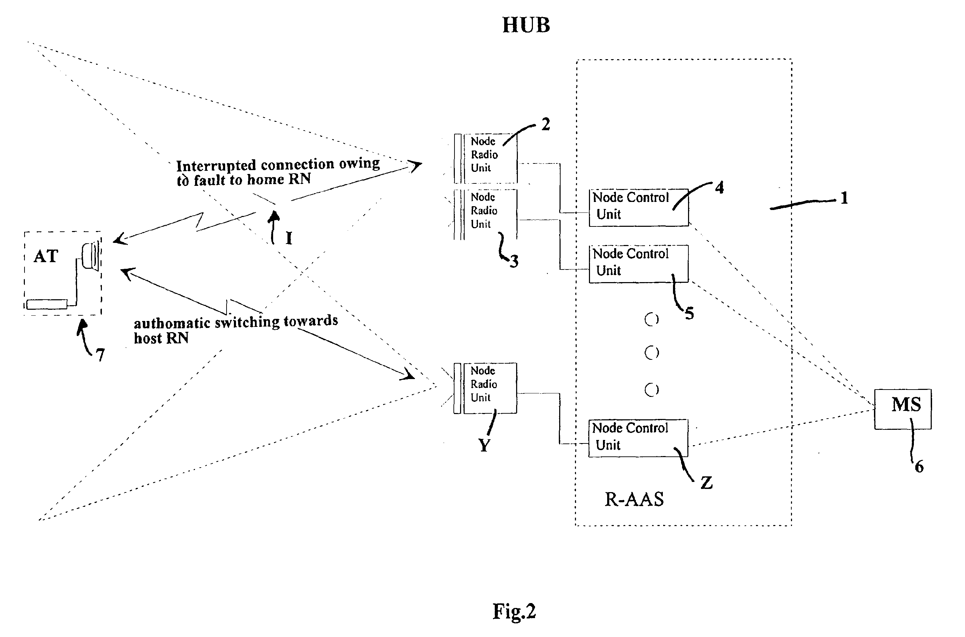

With reference to Fig. 2, the invention comprises a hub 1, which accommodates a number of radio nodes (RN) 2, 3, ...Y, each controlled by a control unit 4, 5, ...Z of the node, and a management system (MS) 6. Normally, the subscriber terminal (AT) 7 is connected to the home radio node (home RN) 2, namely it is inserted in a normal traffic condition. When, upon a failure, this connection is interrupted (as depicted at I in Fig. 2), according to the invention said terminal 7 is switched towards the host radio node Y. To this purpose, a redundancy switching logic is provided in the subscriber access terminal 7, which is apt to automatically switch upon failure in the connection normally operating between terminal 7 and radio node 2.

Thereby, the invention very simply provides a high redundancy configuration, which is based just on the capability of the subscriber access terminal (AT) (7 in the case of Fig. 2) to be switched from the home radio node (home RN 2 in the case of Fig. 2) to a host radio node (host RN Y), namely to a radio node which is normally allocated to other access terminal (AT) of the same sector, but which exhibits the possibility to bear an additional traffic.

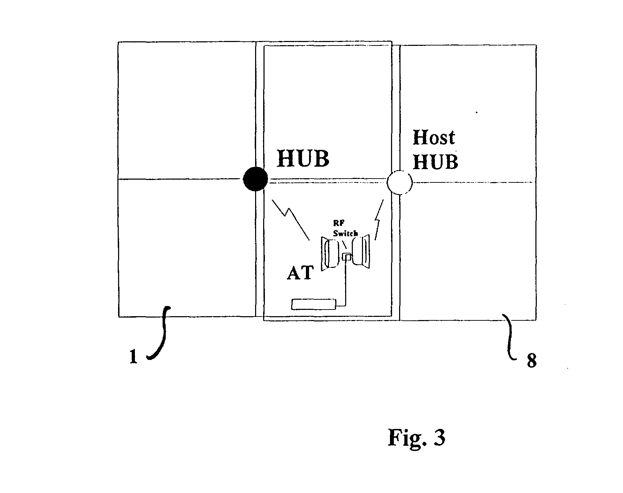

In the inventive system, the host radio node may be arranged not only in the same home hub 1, such as in the case of Fig. 2, but also in a hub different than the one containing the home radio node RN, i.e. in a host hub 8, such as in the case of Fig. 3. When the host radio node RN belongs to a host hub, it can be necessary to provide the subscriber access terminal AT with two antennas (which are directed towards the two different hubs) and with a two-ways radio frequency switch, or with a single antenna with electronically routed beams. This situation is depicted in Fig. 3.

As it is understood, with the inventive system it is not so mandatory to provide any stand-by radio node (any expensive RN stand-by), since the redundancy switching logic is, as it has been seen, in the subscriber access terminal (AT).

The procedure which is possible to activate from failure detection to restore of system proper function is below described, only for example purpose:
1. the management system (or local intelligence) MS detects fault on a radio node;
2. the MS turns off the transmitter of the faulty RN;
3. the subscriber AT inside the "faulty" sector does not receive downstream traffic and automatically tunes the "host" frequency, the "host" frequency might have been pre-stored during the installation phase;
4. if the "host" RN belongs to a different ("host") Hub, then the antenna switch will be routed to the second antenna;
5. the "host" RN manages the new subscriber ATs;
6. the MS re-routes all traffic connections to the host RN,
7. after faulty unit has been restored, MS communicates to the ATs to switch to the original home RN.
The invention ensures noticeable benefits, among which, without seek for completeness, it is to mention the cost efficiency in terms of equipment and infrastructures (tower, power, etc.) since no dedicated stand-by unit is needed and an easy upgrade with no impact on the redundancy configuration.

It is understood that embodiments and/or modifications of the system, other than the ones illustrated, are possible, still remaining in the scope of the present invention.

## Claims

1. Access terminal re-routing redundancy capability in point-multipoint radio communication systems, consisting of giving a subscriber access terminal the feature to automatically and autonomously switch from a radio node, to which it is normally connected, to an alternative radio node, usually not dedicated to the redundancy functionality.

2. Re-routing as claimed in claim 1., wherein a redundancy switching logic is provided in said access terminal, apt to automatically switch to the alternative radio node (host radio node) upon failure in the connection, which normally operates between the terminal itself and the home radio node.

3. Re-routing as claimed in any claim 1. and 2., wherein the host radio node is capable to be allocated to other access terminals located in the same sector and has the possibility to bear an additional traffic.

4. Re-routing as claimed in any claim 1. to 3., wherein said alternative radio node is located in the same hub as the radio node with respect to which it has been switched.

5. Re-routing as claimed in any claim 1. to 3., wherein said alternative radio node is located in a hub different than the one where the radio node with respect to which it has been switched is.

6. Re-routing as claimed in claim 5., wherein the access terminal is provided with two antennas directed towards said two different hubs and with a two-ways radio frequency switch, or with a single antenna with electronically routed beams.
